# EUROPÄISCHE PATENTSCHRIFT

(11) **EP 1 013 961 B1**
(45) Veröffentlichungstag und Bekanntmachung des Hinweises auf die Patenterteilung: **23.02.2005**
(21) Anmeldenummer: 99123408.9
(22) Anmeldetag: 24.11.1999
(51) Int. Cl.: F16F 1/38, B60G 11/12

(54) **Gelenklager, insbesondere Federaugenlager**
Pivot bearing, particulary spring eye bearing
Palier à articulation, en particulier palier d'oeillet de ressort

(30) Priorität: 21.12.1998 DE 19859152
(43) Veröffentlichungstag der Anmeldung: 28.06.2000
(73) Patentinhaber: Jörn ELZA GmbH, 71336 Waiblingen (DE)
(72) Erfinder: Zawadzki, Bernd, 71404 Korb (DE)
(74) Vertreter: Neubauer, Hans-Jürgen, Dipl.-Phys.

(56) Entgegenhaltungen:
- EP-A- 0 353 347
- EP-A- 0 373 307
- EP-A- 0 493 731
- EP-A- 0 496 044
- GB-A- 1 000 691
- GB-A- 1 101 928
- US-A- 1 911 866
- US-A- 2 238 197
- US-A- 5 820 115

## Beschreibung

Die Erfindung betrifft ein Gelenklager, insbesondere ein Federaugenlager nach dem Oberbegriff des Anspruchs 1.

Die Merkmale des Oberbegriffs von Anspruch 1 sind aus Dokument EP-A-0 353 347 bekannt.

Ein durch Vorbenutzung bekanntes, gattungsgemäßes Gelenklager als Federaugenlager einer Blattfederlagerung umfaßt eine zylindrische Gelenkbuchse, bestehend aus wenigstens einem radial inneren, stabilen und dickwandigen Stahlrohr, auf dessen zylindrischer Außenfläche eine Gummischicht aufvulkanisiert ist. Als erstes, karosserieseitiges Lagerteil sind zwei beabstandete, durch einen Befestigungsbolzen verbundene Halteplatten als Bauteile eines Federgehänges einer Blattfederlagerung eines Nutzfahrzeugs vorgesehen.

Das Federauge der Blattfeder bildet ein Aufnahmeauge als zweites Lagerteil, in das die zylindrische, im Herstellzustand zumindest in Teilbereichen im Durchmesser größere Gelenkbuchse unter radialer Vorspannung der Gummischicht zur Herstellung einer verdrehfesten Verbindung zwischen der Gelenkbuchse und dem Aufnahmeauge eingepreßt ist. Die vorstehende Anordnung ist mittels einer Befestigungsschraube zwischen den Halteplatten eingespannt, dergestalt, daß der Befestigungsbolzen als Schraubenbolzen im Stahlrohr aufgenommen ist und sich mit einem Bolzenkopf an der Außenseite einer Halteplatte und mit einer Schraubenmutter an der Außenseite der anderen Halteplatte abstützt. Dabei ist die axiale Verspannlänge durch die Länge des Stahlrohres vorgegeben, das fest und unverdrehbar zwischen den Halteplatten eingespannt ist.

Weiter ist in einer modifizierten Ausführungsform eines solchen Gelenklagers ein Kunststoffrohr formschlüssig in das Stahlrohr eingesteckt, das lediglich dazu dient, den inneren Durchmesser des äußeren Stahlrohres auf den Durchmesser des Schraubenbolzens der Befestigungsschraube zu reduzieren und dadurch das Gelenklager zu zentrieren. Die Einspannkraft und Haltekraft zwischen den Halteplatten wird auch hier durch das fest und unverdrehbar eingespannte äußere Stahlrohr aufgenommen und abgestützt.

Relativbewegungen zwischen dem ersten und zweiten Lagerteil werden ausschließlich molekular in der Gummischicht aufgenommen. Eine durchrutschende Verbindung zwischen dem ersten und zweiten Lagerteil ist hier nach der Montage weder vorgesehen noch möglich.

Daher ist die Montage als Federaugenlager aufwendig und kostenintensiv, da eine Blattfeder auf die statische Belastung vorgespannt und dann die Befestigungsschrauben angezogen werden müssen, wodurch sich die Mittellage für die beidseitig möglichen Einfederungen ergibt, so daß die Gummischicht im Fahrbetrieb ausgehend von dieser Mittellage nicht übermäßig beansprucht wird. Zudem besteht bei einem solchen Gelenklager kein Überlastschutz für Extremeinfederungen.

Bei diesen bekannten Gelenklagern ist im Herstellzustand der Gelenkbuchse die Gummischicht in den axialen Endbereichen zu umlaufenden, radial abstehenden Gummiwülsten verdickt. Die axiale Länge des Aufnahmeauges ist geringer als die der Gelenkbuchse. Im eingepreßten Zustand der Gelenkbuchse liegt das Aufnahmeauge mit abgerundeten Stirnseiten zwischen den unter Vorspannung daran anliegenden Gummiwülsten. Zudem sind die Gummiwülste so dimensioniert, daß sie im montierten Zustand, ebenso wie die Stirnseiten der Gummischicht unter Vorspannung an den Halteplatten anliegen. Damit wird eine mittige Halterung des Aufnahmeauges zwischen den Halteplatten erreicht mit einer jeweils zwischengeschalteten Gummischicht zwischen den Stirnseiten des Aufnahmeauges und den Halteplatten, die insbesondere auch die axiale Steifigkeit bestimmen.

Die vorbeschriebenen, gattungsgemäßen Gelenklager werden insbesondere für Blattfederlagerungen an leichteren Nutzfahrzeugen bis ca. 15 t verwendet. Für schwere Nutzfahrzeuge sind andere Ausführungen bekannt, wie z. B. Buchsenanordnungen mit Stützringen an Gummischichtstirnseiten und einem längsgeschlitzten, äußeren Metallrohr (EP 0 493 731 B1)

Aufgabe der Erfindung ist es, ein Gelenklager, insbesondere als Federaugenlager einer Blattfeder zu schaffen, das bei guter Funktion einfach und kostengünstig montierbar ist.

Diese Aufgabe wird mit den Merkmalen des Anspruchs 1 gelöst.

Gemäß Anspruch 1 umfaßt die Gelenkbuchse weiter ein Gleitlagerrohr, das auf das innere Teil aufgesteckt ist mit einer verdrehfesten Verbindung zur Gummischicht. Die Gelenkbuchse ist in das Aufnahmeauge eingepreßt, wobei durch eine radiale und/oder axiale Gummiverdrängung eine Vorspannung in der Gummischicht und damit auf das Gleitlagerrohr aufgebaut ist dergestalt, daß das Gleitlagerrohr auf dem inneren Teil durch Reibschluß bei normal vorgesehenen Betriebsbedingungen bis zu einem bestimmten Losbrechmoment drehfest gehalten ist und Lagerbewegungen molekular in der Gummischicht aufgenommen werden und daß bei einer großen Drehbelastung über dem Losbrechmoment das Gleitlagerrohr auf dem inneren Teil zum Abbau dieser großen Drehbelastung in eine weniger belastete, jedoch dort wieder drehfest gehaltene Position durchrutscht, in der weitere Lagerbewegungen wieder molekular in der Gummischicht aufgenommen werden.

Dies stellt einerseits einen Überlastungsschutz dar und ist besonders vorteilhaft bei der Montage von Blattfedern verwendbar: die Blattfedern müssen am Fahrzeug nicht mehr im betriebsmäßig vorgespannten Zustand montiert werden, da sich die Gelenklager beim Aufstellen des Fahrzeugs auf die Räder mittels Durchrutschen selbsttätig auf eine Nullage entsprechend der statischen Belastung einstellen.

Ferner umfasst die Gelenkbuchse weiter ein Druckverteilungsrohr, auf dessen Außenfläche die Gummischicht festhaftend angebracht, vorzugsweise aufvulkanisiert ist, wobei das Druckverteilungsrohr und die Gummischicht ein einstückiges Buchsenteil bilden. In das Druckverteilungsrohr ist mit einem leichten Preßsitz das Gleitlagerrohr eingesteckt, wobei diese gegenseitige Verbindung nach dem Einpressen der Gelenkbuchse in das Auge drehfest eingespannt ist.

Die Gelenkbuchse weist weiter ein äußeres Rohrteil, vorzugsweise als Blechrohr oder Kunststoffrohr auf, das im eingepreßten Zustand eine drehfeste Verbindung zum Aufnahmeauge bildet, wobei das äußere Rohrteil an der Gummischicht angehaftet ist.

Als Gleitlagerrohr kann vorteilhaft ein Kunststoffrohr ggf. mit einer radial inneren, speziellen Gleitschicht verwendet werden. Es sind auch spezielle Gleitlagerrohre in der Art von Stahlrohren mit einer radial inneren, porösen Zinnbronzeschicht und einer darin verankerten Kunststoff-Gleitschicht verwendbar. Solche auf dem Markt erhältliche Gleitlagerrohre weisen zudem regelmäßig einen radial äußeren, verkupferten Stahlrücken auf. Als Kunststoff-Gleitschichten werden dabei Polytetrafluoräthylen [PTFE] oder Acetalharz (Polyoxymethylen) verwendet. Zwischen dem Stahlrohr und der Zinnbronzeschicht liegt üblicherweise eine Verbindungsschicht aus Kupfer. Solche Gleitlagerrohre sind insbesondere für den Trockenlauf entwickelt worden und weisen bei mittlerer thermischer Beständigkeit einen hohen Verschleißwiderstand bei definiertem Reibwert auf. Somit sind solche Gleitlagerrohre für den erfindungsgemäßen Einsatz hervorragend geeignet.

Um eine Durchmesserverringerung der Gelenkbuchse beim Einpressen in das Aufnahmeauge und damit den Aufbau der erforderlichen Vorspannungen zu begünstigen, wird mit Aspruch 3 vorgeschlagen, das Gleitrohr und/oder das Druckverteilungsrohr und/oder die Gummischicht und/oder das äußere Rohrteil mit einem über die Buchsenlänge durchgehenden Längsschlitz zu versehen, der beim Einpressen weitgehend geschlossen wird.

Gemäß Anspruch 4 soll das Stahlrohr zwischen zwei beabstandete Halteplatten eines Federgehänges verdrehfest eingespannt sein.

In einfachen Ausführungsformen des Gelenklagers kann sich die Gummischicht bei axialen Verlagerungen unmittelbar an den Halteplatten eines Federgehänges für eine axiale Führung abstützen. In einer je nach den Gegebenheiten vorteilhafteren Ausführungsform nach Anspruch 5 werden endseitige Stützringe auf dem Stahlrohr vorgeschlagen, an denen sich die Gummischicht nach dem Einpressen axial abstützen kann. Diese Stützringe sollen nach Anspruch 6 an den Stirnseiten des Druckverteilungsrohrs und/oder des Gleitlagerrohrs anliegen, wobei dies insbesondere auch eine Justierhilfe beim Aufpressen der Stützringe darstellt.

In einer besonders vorteilhaften Weiterbildung nach Anspruch 7 ist die radiale Materialstärke der Stützringe etwas geringer als die Gummischichtdicke und bei einer Ausführungsform mit einem äußeren Rohr übergreift dieses mit axialen, stirnseitigen Überständen und radialen Spalten jeweils die Stützringe. Geringe radiale und kardanische Lagerbewegungen werden im Rahmen der radialen Spalte molekular in der Gummischicht aufgenommen. Bei entsprechenden größeren Bewegungen legt sich dagegen das äußere Rohr mit seinen seitlichen Überständen als Überlastungschutz an den Stützringumfängen an.

Nach Anspruch 8 wird das Gelenklager vorteilhaft als Federaugenlager verwendet, wobei das Federauge je nach den Gegebenheiten zylindrisch ausgedreht oder auch unbearbeitet einsetzbar ist. Bei einem unbearbeiteten Federauge wird vorteilhaft ein äußeres Rohrteil als Kunststoffrohr verwendet, welches sich durch Fließen und Setzen des Kunststoffmaterials an Unebenheiten des Aufnahmeauges und zum Toleranzausgleich anpaßt. Bedingt durch den Gieß- und Rollvorgang bei gerollten Federaugen treten im unbearbeiteten Zustand regelmäßig Durchmesserverringerungen im Bereich der axialen Augenlängsmitte auf. Um hier von vornherein eine verbesserte Anpassung und Toleranzaufnahme im Kunststoffrohr zu gewährleisten, kann es je nach den Gegebenheiten zweckmäßig sein, das Kunststoffrohr zumindest im Außenflächenbereich mit einer entsprechenden, doppelkonusförmigen Einschnürung zu versehen.

Anhand einer Zeichnung wird ein Ausführungsbeispiel der Erfindung näher erläutert.

Es zeigen:
Fig. 1 einen Längsschnitt durch eine Gelenkbuchse im Herstellzustand,
Fig. 2 eine axiale Anschicht der Gelenkbuchse nach Fig. 1,
Fig. 3 einen Längsschnitt durch ein fertig montiertes Gelenklager, und
Fig. 4 einen Querschnitt entlang der Linie A-A der Fig. 3.

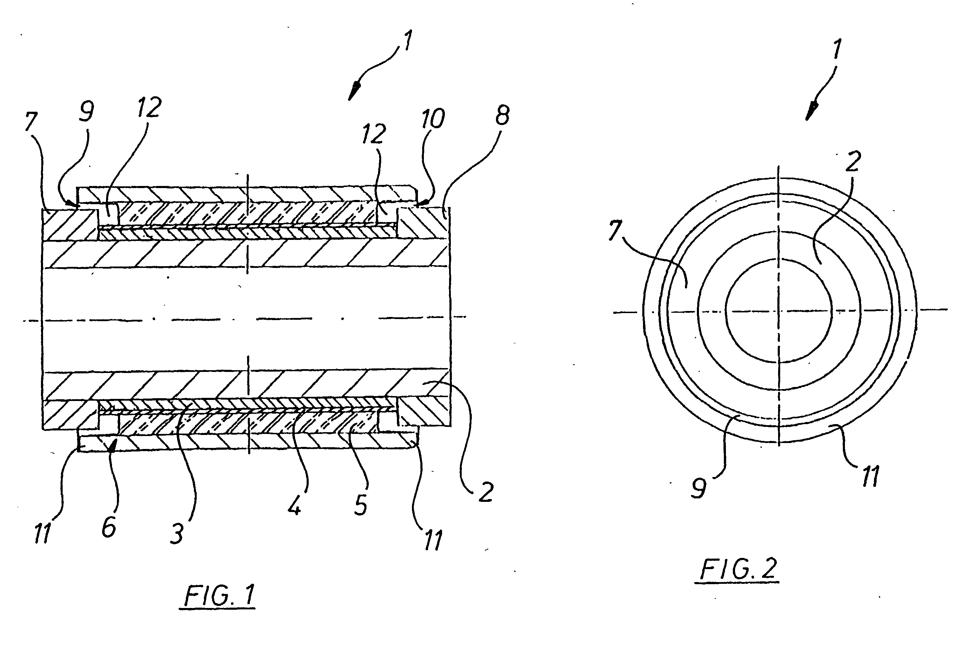

In der Fig. 1 ist eine zylindrische Gelenkbuchse 1 dargestellt. Diese Gelenkbuchse 1 umfaßt ein radial inneres, stabiles und dickwandiges Stahlrohr 2, auf das ein Gleitlagerrohr 3 formschlüssig aufgesteckt ist. Das Gleitlagerrohr 3 kann ein Kunststoffrohr ggf. mit radial innerer Gleitschicht oder auch ein Stahlrohr mit einer radial inneren, porösen Zinnbronzeschicht und darin verankerter Kunststoff-Gleitschicht sein.

Weiter umfaßt die Gelenkbuchse 1, wie dies aus der Fig. 1 ersichtlich ist, ein Druckverteilungsrohr 4. In dieses Druckverteilungsrohr 4 ist das Gleitlagerrohr 3 eingesteckt, wobei im in der Fig. 1 dargestellten Herstellzustand dieses Druckverteilungsrohr 4 und das Gleitlagerrohr 3 mit einem leichten Preßsitz aneinanderliegen.

An der Außenfläche des Druckverteilungsrohrs 4 ist eine Gummischicht 5 anvulkanisiert. Diese Gummischicht 5 ist außerdem noch an ein äußeres Rohrteil 6 anvulkanisiert. Dieses äußere Rohrteil 6 ist z. B. ein Blechrohr oder ein Kunststoffrohr.

Wie dies aus der Darstellung der Fig. 1 ersichtlich ist, weisen das Gleitlagerrohr 3 und das Druckverteilungsrohr 4 eine gleiche Länge auf, während das äußere Rohrteil 6 länger als das Gleitlagerrohr 3 und das Druckverteilungsrohr 4 ist und diese jeweils seitlich überragt. Das Stahlrohr 2 ist wiederum länger als das äußere Rohrteil 6 und überragt dieses ebenfalls jeweils seitlich.

An den beiden Endseiten des Stahlrohrs 2 ist jeweils ein Stützring 7, 8 mit einem Preßsitz auf das Stahlrohr 2 aufgepreßt, wobei die Stützringe 7, 8 bündig an die Stirnflächen des Gleitlagerrohrs 3 und des Druckverteilungsrohrs 4 anschließen. Die radiale Materialstärke der Stützringe 7, 8 ist etwas geringer als die gemeinsame Stärke von Gummischicht 5, Druckverteilungsrohr 4 und Gleitlagerrohr 3, so daß das äußere Rohrteil 6 die Stützringe 7, 8 unter Ausbildung radialer Spalte 9, 10 mit stirnseitigen Überständen 11 axial übergreift. Da die aufvulkanisierte Gummischicht 5 kürzer als das Gleitlagerrohr 3 und das Druckverteilungsrohr 4 ist und von diesen jeweils seitlich überragt wird, erweitern sich die Spalte 9, 10 zwischen den gleitlagerrohrseitigen Stirnseiten der Stützringe 7, 8 und den Stirnseiten der Gummischicht 5 jeweils zu einem axialen Freiraum 12.

In der Fig. 2 ist eine axiale Ansicht der Gelenkbuchse 1 der Fig. 1 dargestellt, aus der insbesondere die Größe der Spalte 9, 10 im nicht eingepreßten Zustand ersichtlich ist.

Um eine Durchmesserverringerung der Gelenkbuchse 1 beim Einpressen und damit den Aufbau der erforderlichen Vorspannungen zu begünstigen, können das Gleitlagerrohr 3 und/oder das Druckverteilungsrohr 4 und/oder die Gummischicht 5 und/oder das äußere Rohrteil 6 zudem jeweils einen über die Buchsenlänge durchgehenden Längsschlitz aufweisen, was hier allerdings nicht dargestellt ist.

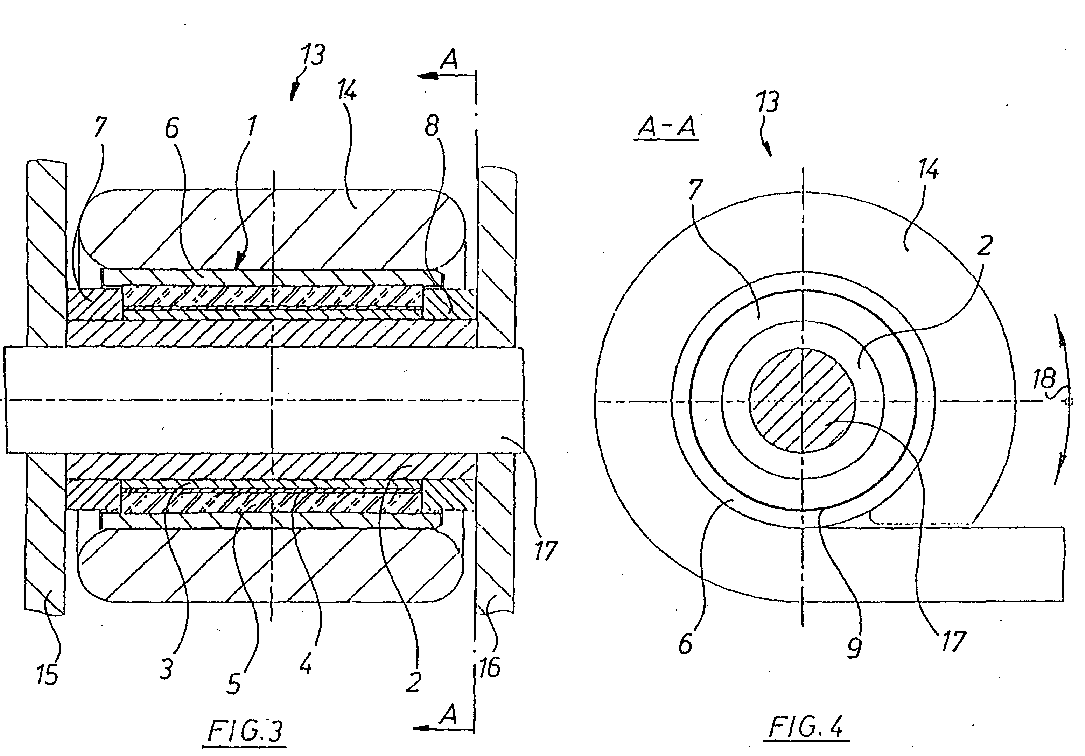

In der Fig. 3 ist ein Längsschnitt durch ein fertig montiertes Federaugenlager 13 dargestellt. Dabei ist die Gelenkbuchse 1 in ein Federauge 14 eingepreßt. Dieses Federauge 14 kann entweder zylindrisch ausgedreht oder auch unbearbeitet sein. Bei einem unbearbeiteten Federauge 14 wird vorzugsweise ein Kunststoffrohr als äußeres Rohrteil 6 verwendet, da sich dieses durch Fließen und Setzen des Kunststoffmaterials an Unebenheiten des Federauges 14 zum Toleranzausgleich anpaßt.

Zudem sind zwei beabstandete Halteplatten 15, 16 eines Federgehänges einer Blattfederlagerung vorgesehen. Zwischen diesen beiden beabstandeten Halteplatten 15, 16 ist das Stahlrohr 2 der Gelenkbuchse 1 verdrehfest mittels eines im Stahlrohr 2 formschlüssig aufgenommenen Schraubenbolzens 17 einer hier nicht näher dargestellten Verschraubung eingespannt.

Diese Halteplatten 15, 16 bilden zusammen mit dem Schraubenbolzen 17 ein erstes Lagerteil, während das Federauge 14 ein zweites Lagerteil ausbildet, das gegenüber dem ersten Lagerteil im wesentlichen Schwenkbewegungen um eine Nullage ausführt, wie dies in der Fig. 4 durch den Pfeil 18 angedeutet ist. Wie dies der Fig. 3 weiter entnommen werden kann, ist die axiale Länge des Federauges 14 geringer als die Länge des Stahlrohres 2, die den Abstand der beiden Halteplatten 15, 16 bestimmt.

Vor dem Einpressen der Gelenkbuchse 1 in das Federauge 14 ist der Außendurchmesser der Gelenkbuchse 1, der durch den Außendurchmesser des äußeren Rohrteils 6 festgelegt ist, größer als der Innendurchmesser des Federauges 14. Durch das Einpressen ergibt sich eine Durchmesserverringerung, die zu einer Gummiverdrängung in der Gummischicht 5 führt. Diese Gummiverdrängung erfolgt in die vor dem Einpressen vorhandenen, stirnseitigen Freiräume 12, die nach dem Einpressen entsprechend der Fig. 3 ausgefüllt sind. Dadurch liegen die seitlichen Stützringe 7, 8 nach dem Einpressen stirnseitig an der Gummischicht 5 für eine gute Seitenführung und für eine verbesserte Abdichtung an.

Die Spalte 9, 10 werden beim Einpreßvorgang in das Federauge 14 ebenfalls etwas verringert, wie dies aus der Fig. 4, die einen Querschnitt entlang der Linie A-A der Fig. 3 darstellt, gezeigt ist. Durch die radiale und/oder axiale Gummiverdrängung ist eine Vorspannung in der Gummischicht 5 und damit auf das Gleitlagerrohr 3 aufgebaut. Dadurch ist das Gleitlagerrohr 3 bei normalen Betriebsbedingungen bis zu einem bestimmten Losbrechmoment durch Reibschluß drehfest auf dem inneren Stahlrohr 2 gehalten, wobei Lagerbewegungen molekular in der Gummischicht 5 aufgenommen werden. Bei einer über dem Losbrechmoment liegenden, großen Drehbelastung rutscht allerdings das Gleitlagerrohr 3 auf dem Stahlrohr 2 zum Abbau dieser großen Drehbelastung in eine weniger belastete, jedoch dort wieder drehfest gehaltene Position durch. In dieser Position werden die weiteren Lagerbewegungen ebenfalls wieder molekular in der Gummischicht 5 aufgenommen.

## Patentansprüche

1. Gelenklager, als Federaugenlager, eines Kraftfahrzeugs
mit einer zylindrischen Gelenkbuchse, die ein radial inneres, stabiles, dickwandiges Teil (2) und eine zylindrische Gummischicht (5) umfasst,
mit einem Aufnahmeauge (14) als zweites Lagerteil, als Federauge einer Blattfeder, in das die zylindrische, im Herstellzustand im Durchmesser größere Gelenkbuchse (1) unter radialer Vorspannung zur Herstellung einer verdrehfesten Verbindung zwischen der Gelenkbuchse (1) und dem Aufnahmeauge (14) eingepresst ist, wobei
die Gelenkbuchse (1) weiter ein Gleitlagerrohr (3) umfasst, das auf das innere Teil (2) aufgesteckt ist mit einer verdrehfesten Verbindung zur Gummischicht (5), und
diese Gelenkbuchse (1) in das Aufnahmeauge (14) eingepresst ist, wobei durch eine radiale und/oder axiale Gummiverdrängung eine Vorspannung in der Gummischicht (5) und damit auf das Gleitlagerrohr (3) aufgebaut ist dergestalt, dass das Gleitlagerrohr (3) auf dem inneren Teil (2) durch Reibschluss bei normal vorgesehenen Betriebsbedingungen bis zu einem bestimmten Losbrechmoment drehfest gehalten ist und Lagerbewegungen molekular in der Gummischicht (5) aufgenommen werden und dass bei einer großen Drehbelastung über dem Losbrechmoment das Gleitlagerrohr (3) auf dem inneren Teil (3) zum Abbau dieser großen Drehbelastung in eine weniger belastete, jedoch dort wieder drehfest gehaltene Position durchrutscht, in der weitere Lagerbewegungen wieder molekular in der Gummischicht (5) aufgenommen werden,
**dadurch gekennzeichnet,**
**dass** das innere Teil ein Stahlrohr ist mit einem Befestigungsbolzen, der im Stahlrohr aufgenommen ist und ein Bauteil eines ersten Lagerteils bildet,
**dass** die Gelenkbuchse (1) ein Druckverteilungsrohr (4) umfasst, auf dessen Außenfläche die Gummischicht (5) festhaftend angebracht, vorzugsweise aufvulkanisiert ist, wobei das Druckverteilungsrohr (4) und die Gummischicht (5) ein einstückiges Buchsenteil bilden,
**dass** das Gleitlagerrohr (3) in das Druckverteilungsrohr (4) eingesteckt ist, wobei im Herstellzustand das Gleitlagerrohr (3) und das Druckverteilungsrohr (4) mit einem leichten Presssitz aneinanderliegen und im in das Auge eingepressten Zustand gegeneinander drehfest gehalten sind, und
**dass** die Gelenkbuchse (1) weiter ein äußeres Rohrteil (6), vorzugsweise als Blechrohr oder Kunststoffrohr aufweist, das im eingepressten Zustand eine drehfeste Verbindung zum Aufnahmeauge (14) bildet, wobei das äußere Rohrteil (6) an der Gummischicht (5) angehaftet ist.

2. Gelenklager nach Anspruch 1, **dadurch gekennzeichnet, dass** das Gleitlagerrohr (3) ein Kunststoffrohr gegebenenfalls mit radial innerer Gleitschicht oder ein Stahlrohr mit einer radial inneren, porösen Zinnbronzeschicht und darin verankerten Kunststoff-Gleitschicht ist.

3. Gelenklager nach Anspruch 1 oder 2, **dadurch gekennzeichnet, dass** das Gleitlagerrohr (3) und/oder das Druckverteilungsrohr (4) und/oder die Gummischicht (5) und/oder das äußere Rohrteil (6) einen über die Buchsenlänge durchgehenden Längsschlitz aufweisen, der beim Einpressen der Gelenkbuchse (1) in das Aufnahmeauge (14) und der damit verbundenen Durchmesserverringerung zumindest weitgehend geschlossen wird.

4. Gelenklager nach einem der Ansprüche 1 bis 3, **dadurch gekennzeichnet, dass** das erste Lagerteil weiter zwei beabstandete Halteplatten (15, 16), insbesondere als Bauteile eines Federgehänges einer Blattfederlagerung eines Nutzfahrzeugs umfasst, zwischen die das innere Stahlrohr (2) mittels des Befestigungsbolzens (18) einer Schraubverbindung verdrehfest eingespannt ist, wobei die axiale Länge des Stahlrohrs (2) größer als die axiale Länge des Aufnahmeauges (14) ist.

5. Gelenklager nach einem der Ansprüche 1 bis 4, **dadurch gekennzeichnet,**
**dass** an beiden Endseiten des Stahlrohrs (2), im noch nicht in das Aufnahmeauge (14) eingepressten Zustand der Gelenkbuchse (1), Stützringe (7, 8) mit einem Presssitz aufgepresst sind mit jeweils einem axialen Freiraum (12) zur jeweils benachbarten Stirnseite der Gummischicht (5), und
**dass** nach dem Einpressen der Gelenkbuchse (1) in das Aufnahmeauge (14) der Gummi der Gummischicht (5) in die beidseitigen Freiräume (12) so verdrängt ist, dass eine Anlage und axiale Abstützung zwischen Gummischicht (5) und Stützringen (7, 8) erfolgt.

6. Gelenklager nach Anspruch 5, **dadurch gekennzeichnet, dass** die Stützringe (7, 8) jeweils an den Stirnseiten des Druckverteilungsrohrs (4) und/oder des Gleitlagerrohrs (3) anliegen.

7. Gelenklager nach Anspruch 5 oder 6, **dadurch gekennzeichnet, dass** die radiale Materialstärke der Stützringe (7, 8) etwas geringer als die Gummischichtdicke (5) ist und das äußere Rohrteil (6) mit axialen, stirnseitigen Überständen (11) und radialen Spalten (9, 10) die Stützringe (7, 8) jeweils übergreift.

8. Gelenklager nach einem der Ansprüche 1 bis 7, **dadurch gekennzeichnet, dass** das Aufnahmeauge (14) ein zylindrisch ausgedrehtes oder bei einem äußeren Rohrteil als Kunststoffrohr ein unbearbeitetes Federauge ist, wobei vorzugsweise das Kunststoffrohr jeweils zur Längsmitte hin eine etwa koppelkonusförmige Einschnürung aufweist.

## Claims

1. Pivot bearing, as a spring eye bearing, of a motor vehicle
having a cylindrical pivot bush which comprises a radially inner, robust, thick-walled part (2) and a cylindrical rubber layer (5),
having a locating eye (14) as second bearing part, as a spring eye of a leaf spring, into which eye the cylindrical pivot bush (1), which is larger in diameter in the manufactured state, is pressed under radial prestress to produce a rotationally fixed connection between the pivot bush (1) and the locating eye (14),
the pivot bush (1) furthermore comprising a sliding-bearing tube (3) which is placed onto the inner part (2) with a rotationally fixed connection to the rubber layer (5), and
this pivot bush (1) being pressed into the locating eye (14), a radial and/or axial displacement of rubber causing a prestress to be built up in the rubber layer (5) and therefore on the sliding-bearing tube (3) in such a manner that the sliding-bearing tube (3) is held in a rotationally fixed manner on the inner part (2) by a friction grip during operating conditions normally provided up to a certain breakaway torque and bearing movements are absorbed molecularly in the rubber layer (5), and, during a high rotational load beyond the breakaway torque, the sliding-bearing tube (3), to reduce this high -rotational load, slips on the inner part (2) into a position which is subjected to a lower load but in which it is again held in a rotationally fixed manner and in which further bearing movements are again absorbed molecularly in the rubber layer (5),
**characterized**
**in that** the inner part is a steel tube with a fastening bolt which is accommodated in the steel tube and forms a component of a first bearing part,
**in that** the pivot bush (1) comprises a pressure-distributing tube (4), to the outer surface of which the rubber layer (5) is attached in a firmly adhering manner, preferably is vulcanized in place, the pressure-distributing tube (4) and the rubber layer (5) forming a single-piece bush part,
**in that** the sliding-bearing tube (3) is inserted into the pressure-distributing tube (4), the sliding-bearing tube (3) and the pressure-distributing tube (4), in the manufactured state, bearing against each other with a slight press fit and, in the state in which they are pressed into the eye, being held in a rotationally fixed manner with respect to each other, and
**in that** the pivot bush (1) furthermore has an outer tube part (6), preferably in the form of a sheet-metal tube or plastic tube, which, in the pressed-in state, forms a rotationally fixed connection to the locating eye (14), the outer tube part (6) being stuck to the rubber layer (5).

2. Pivot bearing according to Claim 1, **characterized in that** the sliding-bearing tube (3) is a plastic tube if appropriate with a radially inner sliding layer, or a steel tube with a radially inner, porous tin bronze layer and plastic sliding layer secured therein.

3. Pivot bearing according to Claim 1 or 2, **characterized in that** the sliding-bearing tube (3) and/or the pressure-distributing tube (4) and/or the rubber layer (5) and/or the outer tube part (6) have a longitudinal slot which is continuous over the length of the bush and is at least substantially closed when the pivot bush (1) is pressed into the locating eye (14) and with the associated reduction in diameter.

4. Pivot bearing according to one of Claims 1 to 3, **characterized in that** the first bearing part furthermore comprises two spaced-apart retaining plates (15, 16), in particular as components of a spring hanger of a leaf-spring mounting of a commercial vehicle, between which the inner steel tube (2) is clamped in place in a rotationally fixed manner by means of the fastening bolt (18) of a screw connection, the axial length of the steel tube (2) being greater than the axial length of the locating eye (14).

5. Pivot bearing according to one of Claims 1 to 4, **characterized in that**, in the state in which the pivot bush (1) is not yet pressed into the locating eye (14), supporting rings (7, 8) are pressed in place with a press fit on both end sides of the steel tube (2) with in each case an axial clearance (12) relative to the respectively adjacent end side of the rubber layer (5), and
**in that**, after the pivot bush (1) has been pressed into the locating eye (14), the rubber of the rubber layer (5) is displaced into the clearance spaces (12) on both sides in such a way that contact and axial support is effected between the rubber layer (5) and supporting rings (7, 8).

6. Pivot bearing according to Claim 5, **characterized in that** the supporting rings (7, 8) bear in each case against the end sides of the pressure-distributing tube (4) and/or of the sliding-bearing tube (3).

7. Pivot bearing according to Claim 5 or 6, **characterized in that** the radial material thickness of the supporting rings (7, 8) is slightly smaller than the rubber-layer thickness (5), and the outer tube part (6) in each case overlaps the supporting rings (7, 8) with axial, end-side projecting lengths (11) and radial gaps (9, 10).

8. Pivot bearing according to one of Claims 1 to 7, **characterized in that** the locating eye (14) is a cylindrically bored or, in the case of an outer tube part in the form of a plastic tube, an unmachined spring eye, the plastic tube preferably in each case having an approximately double-cone-shaped constriction towards the longitudinal centre.

## Revendications

1. Palier d'articulation, tel qu'un palier à oeillet de ressort, d'un véhicule automobile, avec une douille d'articulation qui comprend une partie radiale interne solide et à paroi épaisse (2) et une couche de caoutchouc cylindrique (5),
avec un oeillet de logement (14), en tant que deuxième partie de palier, tel qu'un oeillet d'un ressort à lames, dans lequel la douille d'articulation (1), d'un diamètre un peu supérieur dans l'état de fabrication, est pressée, sous une contrainte radiale, pour créer une liaison sans rotation entre la douille d'articulation (1) et l'oeillet de logement (14), moyennant quoi
la douille de palier (1) comprend en outre un tube de palier à glissement (3) qui est emboîté sur la partie interne (2) avec une liaison sans rotation avec 1a couche de caoutchouc (5), et
cette douille de palier (1) est pressée dans l'oeillet de logement (14), moyennant quoi grâce à une poussée radiale et/ou axiale du caoutchouc, une contrainte dans la couche de caoutchouc (5) et donc sur le tube de palier de glissement (3) est générée, de telle sorte que le tube de palier de glissement (3) soit maintenu de manière fixe en rotation sur la partie interne (2) grâce à liaison par friction dans des conditions de fonctionnement normales jusqu'à un couple de décollement déterminé et que les mouvements du palier soient pris en charge de manière moléculaire dans la couche de caoutchouc (5) et que, lors d'une importante sollicitation en rotation par l'intermédiaire du couple de décollement, le tube du palier de glissement (3) glisse, pour diminuer cette importante sollicitation en rotation, sur la partie interne (3) vers une position moins sollicitée mais également maintenue fixe en rotation, dans laquelle des mouvements supplémentaires du palier sont également pris en charge de manière moléculaire dans la couche de caoutchouc (5),
**caractérisé**
**en ce que** la partie interne est un tube d'acier avec un boulon de fixation qui est logé dans le tube d'acier et constitue un composant d'une première partie du palier,
**en ce que** la douille de l'articulation (1) comprend un tube de répartition de la pression (4) sur la surface externe duquel la couche de caoutchouc (5) est fixée de manière adhésive, de préférence vulcanisée, moyennant quoi le tube de répartition de la pression (4) et la couche de caoutchouc (5) constituent une partie de palier monobloc,
**en ce que** le tube de palier de glissement (3) est inséré dans le tube de répartition de la pression (4), moyennant quoi dans l'état de fabrication, le tube de palier de glissement (3) et le tube de répartition de la pression (4) s'appuient avec un léger ajustement sans jeu et sont maintenus de manière fixe en rotation dans l'état pressé dans l'oeillet, et
**en ce que** la douille de l'articulation (1) comprend en outre une partie tubulaire externe (6) de préférence un tube de tôle ou un tube de matière plastique, qui forme, dans l'état pressé, une liaison sans rotation avec l'oeillet de logement (14), moyennant quoi la partie tubulaire externe (6) adhère à la couche de caoutchouc (5).

2. Palier d'articulation selon la revendication 1, **caractérisé en ce que** le tube de palier de glissement (3) est un tube de matière plastique le cas échéant avec une couche de glissement radiale interne ou un tube d'acier avec une couche de zinc-bronze poreuse radiale interne et une couche de glissement de matière plastique fixée à l'intérieur.

3. Palier d'articulation selon la revendication 1 ou 2, **caractérisé en ce que** le tube de palier de glissement (3) et/ou le tube de répartition de la pression (4) et/ou la couche de caoutchouc (5) et/ou la partie tubulaire externe (6) comprennent une fente longitudinale traversant la longueur de la douille, qui est fermée lors du pressage de la douille de l'articulation (1) dans l'oeillet de logement (14), et lors du rétrécissement de diamètre qui y est associé.

4. Palier d'articulation selon l'une des revendications 1 à 3, **caractérisé en ce que** la première partie du palier comprend en outre deux plaques de maintien (15, 16) espacée, plus particulièrement en tant que composants d'une suspension à ressorts d'un logement de ressort à lames d'un véhicule utilitaire, entre lesquelles le tube d'acier interne (2) est serré de manière fixe en rotation à l'aide du boulon de fixation (18) d'une liaison par vissage, moyennant quoi la longueur axiale du tube d'acier (2) est supérieure à la longueur axiale de l'oeillet de logement (14).

5. Palier d'articulation selon l'une des revendications 1 à 4, **caractérisé**
**en ce que**, au niveau des deux extrémités du tube d'acier (2), dans l'état non encore pressé de la douille de l'articulation (1) dans l'oeillet de logement (14), des bagues d'appui (7, 8) sont pressées avec un ajustement sans jeu avec un espace libre (12) axial par rapport à la face frontale voisine de la couche de caoutchouc (5), et
**en ce que**, après le pressage de la douille d'articulation (1) dans l'oeitlet de logement (14), le caoutchouc de la couche de caoutchouc (5) est poussée dans les deux espaces d'extrémité (12), de telle sorte qu'un appui axial soit réalisé entre la couche de caoutchouc (5) et les bagues d'appui (7, 8).

6. Palier d'articulation selon la revendication 5, **caractérisé en ce que** les bagues d'appui (7, 8) s'appuient au niveau des faces frontales du tube de répartition de la pression (4) et/ou du tube du palier de glissement (3).

7. Palier d'articulation selon la revendication 5 ou 6, **caractérisé en ce que** l'épaisseur radiale des bagues d'appui (7, 8) est légèrement inférieure à l'épaisseur de la couche de caoutchouc (5) et la partie tubulaire externe (6) recouvre les bagues d'appui (7, 8) avec des parties en porte-à-faux (11) et des interstices radiaux (9, 10).

8. Palier d'articulation selon l'une des revendications 1 à 7, **caractérisé en ce que** l'oeillet de logement (14) est un oeillet de ressort tourné de manière cylindrique ou, pour une partie tubulaire externe sous la forme d'un tube de matière plastique, un oeillet de ressort non usiné, moyennant quoi de préférence le tube de matière plastique présente, en direction du centre, un rétrécissement en forme de cône de couplage.
